# EUROPÄISCHE PATENTSCHRIFT

(11) **EP 3 287 679 B1**
(45) Veröffentlichungstag und Bekanntmachung des Hinweises auf die Patenterteilung: **06.05.2020**
(21) Anmeldenummer: 17184254.5
(22) Anmeldetag: 01.08.2017
(51) Int. Cl.: F16K 31/122, F16K 7/14

(54) **MEMBRANVENTIL**
MEMBRANE VALVE
SOUPAPE À MEMBRANE

(30) Priorität: 23.08.2016 DE 102016115638
(43) Veröffentlichungstag der Anmeldung: 28.02.2018
(73) Patentinhaber: GEMÜ Gebr. Müller Apparatebau GmbH & Co. Kommanditgesellschaft, 74653 Ingelfingen (DE)
(72) Erfinder: Zuber, Daniel, 74189 Weinsberg (DE); Baumgärtner, Michael, 74677 Dörzbach (DE); Bissinger, Josef, 74653 Künzelsau (DE)
(74) Vertreter: DREISS Patentanwälte PartG mbB

(56) Entgegenhaltungen:
- DE-A1-102014 004 670
- US-A- 4 840 347
- US-A1- 2009 050 832
- US-B1- 6 685 164

## Beschreibung

Die Erfindung betrifft ein Membranventil nach dem Oberbegriff des Anspruchs 1.

Membranventile mit einem Antriebsgehäuse und einer in dem Antriebsgehäuse angeordneten Antriebsbaugruppe zum Stellen eines Prozessfluids mittels einer Membran sind allgemein bekannt.

Die DE 10 2014 004 670 A1 offenbart ein Ventil mit einem Ventilgehäuse, in dem ein eine Durchströmöffnung umgebender Ventilsitz angeordnet ist. An einem Gehäuseboden eines Antriebsgehäuses ist eine Antriebsgehäuse-Schnittstelle vorgesehen. Dadurch ist es möglich, dass das Ventil einen Ventilantriebs-Baustein und einen Ventilgehäuse-Baustein besitzt, die jeweils als vormontierbare Baugruppen ausgestaltet sein können und in einfacher und schneller Weise zusammengebaut oder voneinander getrennt werden können.

Die EP 1 953 436 A2 offenbart ein Membranventil, dessen Membran in einem Außenbereich auf einen Ventilkörper gedrückt wird.

Die US 4 840 347 A und die US 6 685 164 B1 offenbaren Membranventile mit einem Antriebsgehäuse und einer Antriebsbaugruppe sowie einer Vorspannbaugruppe.

Es ist somit Aufgabe der Erfindung, ein Membranventil nach dem Oberbegriff derart weiterzubilden, dass ein Austausch der bewegten Teile des Membranventils verbessert wird.

Die der Erfindung zugrunde liegende Aufgabe wird durch ein Membranventil nach dem Anspruch 1 gelöst.

Es wird vorgeschlagen, dass das Membranventil eine Vorspannbaugruppe zur Anordnung zwischen der Antriebsbaugruppe und der Membran umfasst, dass ein erstes Federelement die Antriebsbaugruppe vor Einbringung in das Antriebsgehäuse in einem vorgespannten Zustand hält, und dass ein zweites Federelement die Vorspannbaugruppe vor Einbringung in das Antriebsgehäuse in einem vorgespannten Zustand hält.

Es wird somit auf einfache Art und Weise ein Schnellwechselsystem für ein Membranventil geschaffen, bei dem sowohl die Antriebsbaugruppe als auch die Vorspannbaugruppe in einem jeweiligen vorgespannten Zustand in das Antriebsgehäuse einbringbar sind. Vorteilhaft ermöglicht dieses Membranventil ein einfaches und schnelles Wechseln der Antriebsbaugruppe und der Vorspannbaugruppe. Es ergibt sich somit eine Zeitersparnis bei der Wartung des Membranventils, wovon Anwendungen mit einer hohen Anzahl von Schaltzyklen und kurzen Maschinenstehzeiten profitieren. Beispielhaft sei auf die Abfüllung von Getränken verwiesen.

Eine vorteilhafte Ausführungsform des Membranventils zeichnet sich dadurch aus, dass das erste Federelement nach einem Einbringen der Antriebsbaugruppe in das Antriebsgehäuse als Rückstellfeder für einen Steuerkolben wirkt. Vorteilhaft erfüllt damit das erste Federelement mehrere Funktionen. Zum einen stellt das erste Federelement den vorgespannten Zustand her und kann nach der Montage die Funktion als Rückstellfeder für den Antrieb übernehmen.

Eine vorteilhafte Ausführungsform des Membranventils zeichnet sich dadurch aus, dass das zweite Federelement nach dem Einbringen der Vorspannbaugruppe in das Antriebsgehäuse eine Verklemmung der Membran zwischen der Vorspannbaugruppe und einem Ventilkörper bewirkt. Somit erfüllt das zweite Federelement zwei Funktionen, was bedeutet, dass zum einen der vorgespannte Zustand der Vorspannbaugruppe vor einer Montage durch das zweite Federelement bewirkt wird. Zum anderen wird durch die Verklemmung der Membran, welche mittels der Federkraft des zweiten Federelements bewirkt wird, eine Abdichtung des Prozessfluid-führenden Bereichs gegenüber dem Antriebsbereich bewirkt.

Eine vorteilhafte Ausführungsform des Membranventils zeichnet sich dadurch aus, dass die Antriebsbaugruppe und die Vorspannbaugruppe in ihrem jeweiligen montierten Zustand innerhalb des Antriebsgehäuses eine kleinere Längserstreckung aufweisen als in dem vorgespannten Zustand. Hierdurch wird eine Entkopplung des Vorspannzustandes von dem Montagezustand erreicht.

Eine vorteilhafte Ausführungsform des Membranventils zeichnet sich dadurch aus, dass das Antriebsgehäuse eine Montageöffnung umfasst, welche den Zugang zu einem Montageraum des Antriebsgehäuses freigibt, wobei die Antriebsbaugruppe in dem vorgespannten Zustand und die Vorspannbaugruppe in dem vorgespannten Zustand über die Montageöffnung in den Montageraum einbringbar sind. Vorteilhaft werden die Baugruppen so über eine einzige Öffnung, die Montageöffnung, in das Antriebsgehäuse eingebracht, um anschließend das Antriebsgehäuse mit dem Ventilkörper zu verbinden. Damit wird die Anzahl der Handgriffe für einen Wechsel der Baugruppen reduziert.

Eine vorteilhafte Ausführungsform des Membranventils zeichnet sich dadurch aus, dass ein Innenquerschnitt des Montageraums sich von der Montageöffnung weg weisend verjüngt, wobei sich die Vorspannbaugruppe in einem montierten Zustand innerhalb des Antriebsgehäuses an der Verjüngung des Innenquerschnitts abstützt. Vorteilhaft ergeben sich hierdurch geringere Kosten für die Anfertigung des Gehäuses und die Abstützung der Vorspannbaugruppe ist auf einfache Art und Weise umgesetzt.

Eine vorteilhafte Ausführungsform des Membranventils zeichnet sich dadurch aus, dass die Antriebsbaugruppe und die Vorspannbaugruppe zu einer Einbringung in das Antriebsgehäuse verliersicher miteinander verbunden sind. Hierdurch wird ein Wechsel der Antriebsbaugruppe und der Vorspannbaugruppe weiter vereinfacht, was die Anzahl der für einen Wechsel der Baugruppen benötigten Handgriffe weiter reduziert.

Eine vorteilhafte alternative Ausführungsform des Membranventils zeichnet sich dadurch aus, dass das Antriebsgehäuse eine von dem Ventilkörper weg orientierte erste Montageöffnung umfasst, welche den Zugang zu einem ersten Montageraumabschnitt des Antriebsgehäuses freigibt, wobei das Antriebsgehäuse eine zu dem Ventilkörper hin orientierte zweite Montageöffnung umfasst, welche den Zugang zu einem zweiten Montageraumabschnitt des Antriebsgehäuses freigibt, wobei die Antriebsbaugruppe in dem vorgespannten Zustand über die erste Montageöffnung in den ersten Montageraumabschnitt einbringbar ist, wobei die Vorspannbaugruppe in dem vorgespannten Zustand über die zweite Montageöffnung in den zweiten Montageraumabschnitt einbringbar ist, und wobei der erste und zweite Montageraumabschnitt mittels einer Durchgangsöffnung verbunden sind, durch welche eine Ventilspindel hindurchgeführt ist. Vorteilhaft können auf diese Art und Weise die Baugruppen separat voneinander gewechselt werden. Des Weiteren ergibt sich eine Entkopplung des Antriebs von der Vorspannbaugruppe. Insbesondere kann ein Antrieb stärker ausgelegt werden, da beispielsweise ein Antriebszylinderquerschnitt gegenüber dem Querschnitt des zweiten Montageraumabschnitts vergrößert ausgebildet sein kann.

Eine vorteilhafte Ausführungsform des Membranventils zeichnet sich dadurch aus, dass die mit einem Steuerkolben der Antriebsbaugruppe verbundene Ventilspindel durch die Vorspannbaugruppe geführt mit der Membran verbunden ist, wobei die Vorspannbaugruppe ein Gleitlager umfasst, in dem die Ventilspindel geführt ist. Durch das Gleitlager wird eine zentral angeordnete Führung der Ventilspindel geschaffen, welche die Führung der Ventilspindel bei einem Schaltspiel verbessert.

Eine vorteilhafte Ausführungsform des Membranventils zeichnet sich dadurch aus, dass die Vorspannbaugruppe und der Ventilkörper derart ineinandergreifen, dass eine Verdrehung der Vorspannbaugruppe gegenüber dem Ventilkörper um eine Zustellachse verhindert wird. Damit werden die Drehkräfte, welche auf die Membran wirken, reduziert, was die Lebensdauer der Membran erhöht.

Eine vorteilhafte Ausführungsform des Membranventils zeichnet sich dadurch aus, dass das Antriebgehäuse ein dem Ventilkörper zugewandtes erstes Gewinde umfasst, wobei der Ventilkörper ein zu dem ersten Gewinde korrespondierendes zweites Gewinde umfasst. Durch so ineinandergreifende Gewinde kann die Verbindung zwischen Antriebsgehäuse und Ventilkörper auf einfache Art und Weise durch ein Eindrehen erfolgen. Die Anzahl der Handgriffe zur Montage des Membranventils werden reduziert.

Eine vorteilhafte Weiterbildung zeichnet sich dadurch aus, dass das erste Gewinde und/oder das zweite Gewinde zwei- oder viergängig ausgebildet sind. Durch die mehrgängige Ausführung der Gewinde kann insbesondere eine Position von seitlich angeordneten Steuerfluid-Anschlüssen festgelegt werden. Im Falle eines viergängigen Gewindes wird so eine Positionierung der Steuerluft-Anschlüsse in 90°-Schritten erreicht. Bei einem zweigängigen Gewinde hingegen ergeben sich 180°-Schritte.

Eine vorteilhafte Ausführungsform des Membranventils zeichnet sich dadurch aus, dass die Antriebsbaugruppe den Steuerkolben und die mit dem Steuerkolben fest verbundene Ventilspindel umfasst, wobei sich der Steuerkolben mittels des unter Druck stehenden ersten Federelements an einem Federteller abstützt, wobei die Ventilspindel durch eine Durchgangsöffnung des Federtellers hindurchgeführt ist, wobei die Ventilspindel auf einer dem Steuerkolben abgewandten Seite der Durchgangsöffnung einen ersten Anschlagbereich umfasst, und wobei in dem vorgespannten Zustand der Antriebsbaugruppe ein zweiter Anschlagbereich des Federtellers in Zusammenwirken mit dem ersten Anschlagbereich der Ventilspindel eine Bewegung des Steuerkolbens weg von dem Ventilteller begrenzt. Vorteilhaft wird durch die Anschlagbereiche eine verlierersichere Anordnung der Elemente der Antriebsbaugruppe bereitgestellt.

Eine vorteilhafte Ausführungsform des Membranventils zeichnet sich dadurch aus, dass die vorgespannte Vorspannbaugruppe einen Gegenlagerabschnitt und einen Klemmabschnitt mit einem Klemmbereich zur Verklemmung der Membran umfasst, wobei sich der Klemmabschnitt mittels des unter Druck stehenden zweiten Federelements an dem Gegenlagerabschnitt abstützt, wobei der Klemmabschnitt abschnittsweise durch eine Durchgangsöffnung des Gegenlagerabschnitts hindurchgeführt ist, wobei der Klemmabschnitt auf einer dem Klemmbereich abgewandten Seite einen dritten Anschlagbereich umfasst, und wobei in dem vorgespannten Zustand der Vorspannbaugruppe ein vierter Anschlagbereich des Gegenlagerabschnitts in Zusammenwirken mit dem dritten Anschlagbereich des Klemmabschnitts eine Bewegung des Klemmabschnitts weg von dem Gegenlagerabschnitt begrenzt. Vorteilhaft wird durch die Anschlagbereiche eine verlierersichere Anordnung der Elemente der Vorspannbaugruppe bereitgestellt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Für funktionsäquivalente Größen und Merkmale werden in allen Figuren auch bei unterschiedlichen Ausführungsformen die gleichen Bezugszeichen verwendet. In der Zeichnung zeigen:
Figur 1 in schematischer perspektivischer Ansicht ein Membranventil;
Figur 2 in einem zentralen schematischen Schnitt ein Antriebsgehäuse und einen Ventilkörper des Membranventils;
Figur 3 in einer schematischen Draufsicht eine Ausführungsform des Membranventils;
Figur 4 in einer schematischen Draufsicht eine Ausführungsform des Membranventils;
Figur 5 in einer schematischen perspektivischen Schnittansicht eine Baugruppe;
Figur 6 eine schematische Schnittansicht des Membranventils;
Figur 7 das Membranventil in einer perspektivischen schematischen Schnittansicht;
Figur 8 eine schematische Schnittansicht eines Ausschnitts gemäß der Ausführungsform des Membranventils nach der Figur 3;
Figur 9 eine weitere Ausführungsform des Membranventils in einer perspektivischen Ansicht;
Figur 10 in einer schematischen Explosions-Schnittansicht die Antriebsbaugruppe und die Vorspannbaugruppe; und
Figur 11 das Membranventil in einer schematischen Schnittansicht gemäß der Ausführungsform der Figuren 9 und 10.

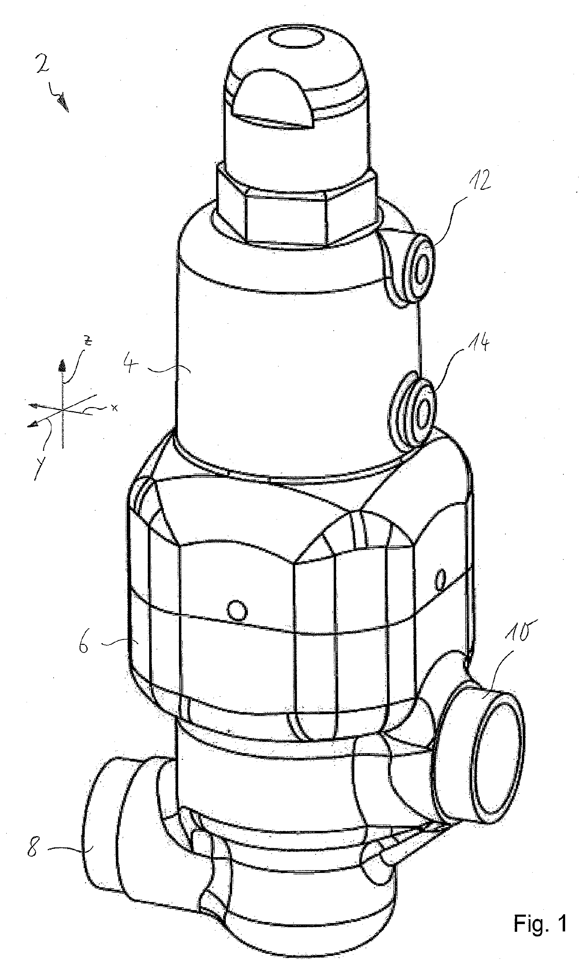

Figur 1 zeigt in schematischer perspektivischer Ansicht ein Membranventil 2, bei welchem ein Antriebsgehäuse 4 an einem Ventilkörper 6 angeordnet ist. Der Ventilkörper 6 umfasst zwei Prozessfluid-Anschlüsse 8 und 10, durch welche das zu stellende Prozess Fluid zu- bzw. abgeführt werden kann. Des Weiteren umfasst der Ventilkörper 6 eine nicht gezeigte Stellöffnung zur Anordnung einer Membran, mit welcher das Prozessfluid gestellt wird. Das Antriebsgehäuse 4 weist zwei Arbeitsfluid-Anschlüsse 12 und 14 auf, mittels denen ein in Figur 1 nicht gezeigter Antrieb mit Arbeitsfluid versorgt wird, um die Membran zu stellen.

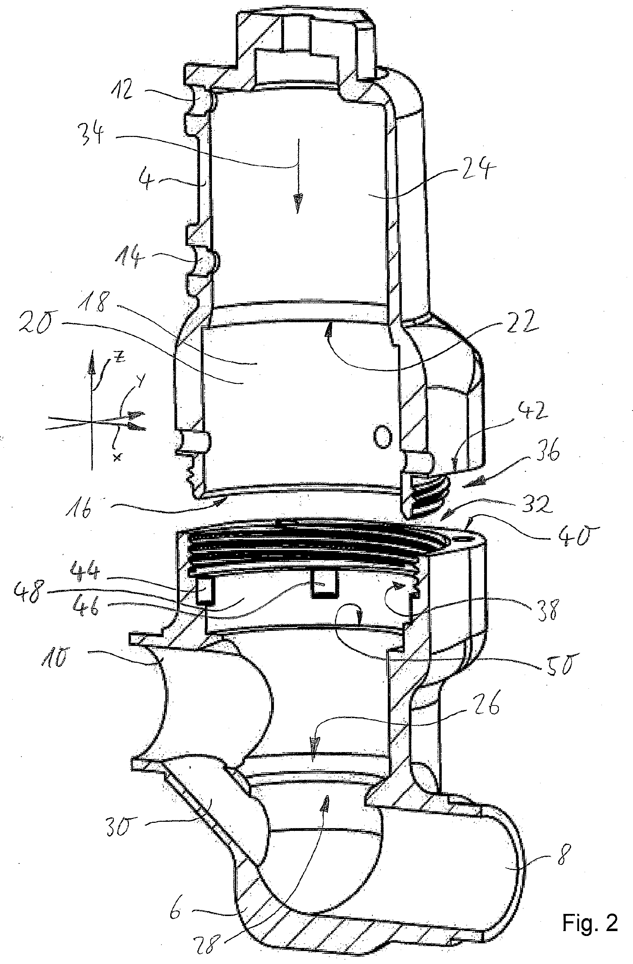

Figur 2 zeigt in einem zentralen schematischen Schnitt entlang einer xz-Ebene das Antriebsgehäuse 4 und den Ventilkörper 6 des Membranventils 2. Das Antriebsgehäuse 4 umfasst eine Montageöffnung 16, welche den Zugang zu einem Montageraum 18 freigibt, soweit das Antriebsgehäuse 4 von dem Ventilkörper 6 entfernt ist. Der Montageraum 18 umfasst einen Vorspannabschnitt 20, wobei der Vorspannabschnitt 20 nach einer Verjüngung 22 des Innenquerschnitts des Montageraums 18 in einen Antriebsabschnitt 24 übergeht. Der Antriebsabschnitt 24 ist mit den Arbeitsfluid-Anschlüssen 12 und 14 verbunden.

Der Ventilkörper 6 weist einen Ventilsitz 26 auf, welcher zu einem Anliegen der Membran und zum Verschließen der Ventilsitzöffnung 28 dient. Des Weiteren ist ein Bypass-Kanal 30 gezeigt, durch welchen das Prozessfluid auch bei geschlossener Ventilsitzöffnung 28 fließen kann. Selbstverständlich kann der Ventilkörper 6 auch ohne Bypass-Kanal 30 ausgebildet sein. Des Weiteren umfasst der Ventilkörper 6 die Stellöffnung 32, durch welche die Membran bei einer Montage des Membranventils 2 in den Ventilkörper 6 eingebracht wird.

Das Antriebsgehäuse 4 weist in eine Zustellrichtung 34 ein Außengewinde 36 auf, welches in ein Innengewinde 38 des Ventilkörpers 6 eindrehbar ist. Die Zustellrichtung 34 zeigt in Richtung des Ventilsitzes 26 und verläuft entlang einer Zustellachse, welche sich längs der Zustellrichtung durch das Membranventil 2 erstreckt. Das Außengewinde 36 und das Innengewinde 38 sind bevorzugt mehrgängige Gewinde, welche gemeinsam mit Anschlägen 40 und 42 eine Position des Antriebsgehäuses 4 gegenüber dem Ventilkörper 6 in einem verschraubten Zustand festlegen. Selbstverständlich können auch das Antriebsgehäuse 4 ein Innengewinde und der Ventilkörper 6 ein zu dem Innengewinde korrespondierendes Außengewinde umfassen.

Bevorzugt kommt, wie in Figur 2 gezeigt, ein viergängiges selbsthemmendes metrisches Innengewinde 38 und ein viergängiges selbsthemmendes metrisches Außengewinde 36 zur Anwendung, beispielsweise mit den Eigenschaften M42 x Ph6 x P 1,5 (Steigung 6, Teilung 1,5). Bei einem selbsthemmenden Gewinde ist ein Reibwinkel größer als der Steigungswinkel. Selbstverständlich kann auch ein Trapezgewinde verwendet werden, welches eine verbesserte Beweglichkeit aufweist. Alternativ zu den viergängigen Ausführungsformen des Außengewinde 36 und des Innengewinde 38 können die jeweiligen Gewinde auch zweigängig ausgestaltet sein.

Alternativ ist auch möglich, eine eingängige Ausführung für das Außengewinde 36 und das Innengewinde 38 vorzusehen.

Alternativ oder zusätzlich zu dem Innengewinde 38 und dem Außengewinde 36 kann der Ventilkörper 6 Gewindebohrungen und das Antriebsgehäuse 4 Durchgangsbohrungen aufweisen. Mittels der Gewindebohrungen und der Durchgangsbohrungen können jeweilige Schrauben durch die Durchgangsbohrungen geführt in die Gewindebohrungen des Ventilkörpers 6 eingedreht werden, um das Antriebsgehäuse 4 zu dem Ventilkörper 6 festzulegen.

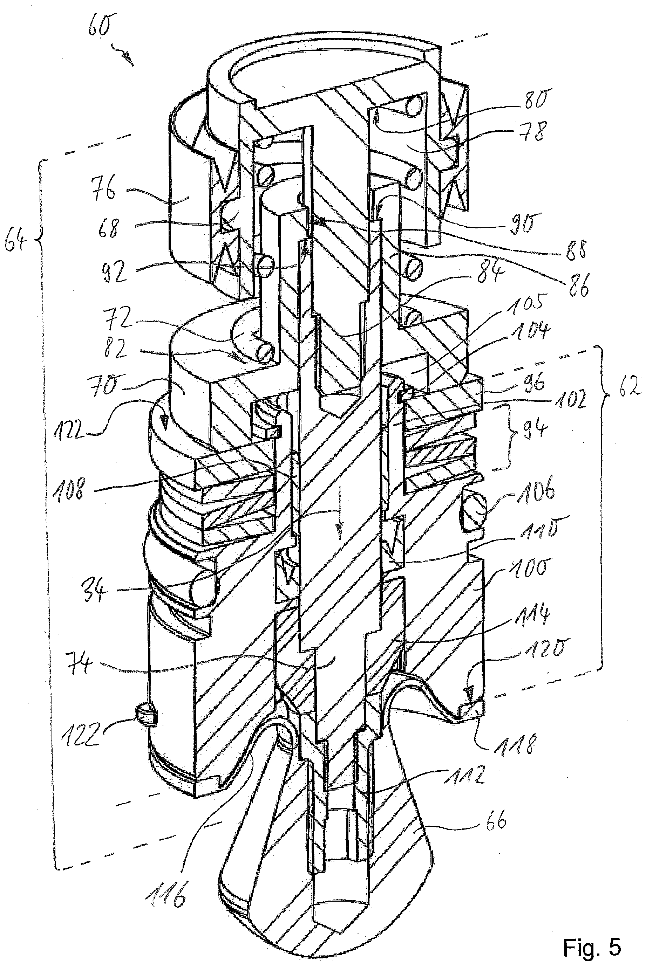

Parallel zur Zustellrichtung 34 erstrecken sich anschließend an das Innengewinde 38 Nuten 44 und 46, die, wie nachfolgend zu Figur 5, erläutert, eine Verdrehsicherung bilden. Ein Montageraum 48 des Ventilkörpers 6 weist in Zustellrichtung 34 einen Klemmbereich 50 zu einer Verklemmung der Membran auf.

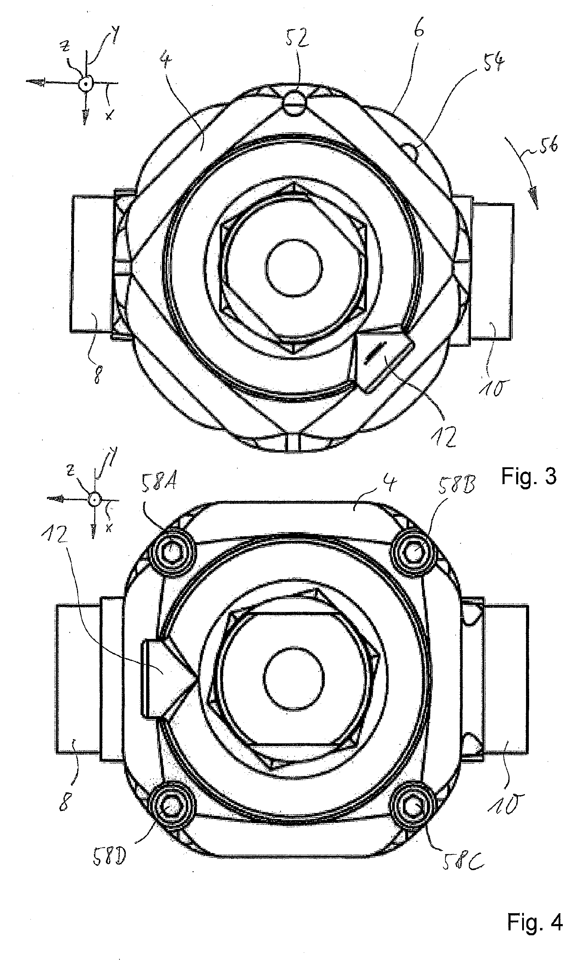

Figur 3 zeigt in einer schematischen Draufsicht entgegen einer z-Richtung eine Ausführungsform des Membranventils 2. Das Antriebsgehäuse 4 umfasst eine parallel zur Zustellrichtung 34 verlaufende Durchgangsbohrungen 52. Der Ventilkörper 6 umfasst eine Sacklochbohrung 54. Aus der in Figur 3 gezeigten Position wird das Antriebsgehäuse 4 gemäß einem Pfeil 56 um 45° gegenüber dem Ventilkörper 6 verdreht, sodass die zueinander korrespondierenden Gewinde des Antriebsgehäuses 4 und des Ventilkörper 6 ineinander gedreht werden und die Durchgangsbohrungen 52 so über der Sacklochbohrung 54 liegt, um mittels eines durch die Durchgangsbohrungen 52 geführten und in die Sacklochbohrung 54 eingreifenden Bolzen eine Position des Antriebsgehäuses 4 zu dem Ventilkörper 6 festzulegen. In einer Endposition zeigt der Arbeitsfluid-Anschluss 12 in die y-Richtung.

Figur 4 zeigt in einer schematischen Draufsicht entgegen einer z-Richtung eine Ausführungsform des Membranventils 2. Im Gegensatz zu Figur 3 ist in Figur 4 gezeigt, dass Schrauben 58A bis 58D durch Durchgangsbohrungen des Ventilkörpers 4 geführt in entsprechende Innengewinde des Ventilkörpers 6 eingreifen und damit den Antriebskörper 4 zu dem Ventilkörper 6 festlegen. Der Arbeitsfluid-Anschluss 12 zeigt in die x-Richtung.

Figur 5 zeigt in einer schematischen perspektivischen Schnittansicht eine Baugruppe 60 in einem vorgespannten Zustand. Die Baugruppe 60 umfasst eine Vorspannbaugruppe 62, eine Antriebsbaugruppe 64 und die Membran 66. Die Antriebsbaugruppe 64 umfasst einen Steuerkolben 68, einen Federteller 70, ein zwischen Federteller 70 und Steuerkolben 68 angeordnetes erstes Federelement 72 und eine Ventilspindel 74. Das erste Federelement 72 ist als Spiraldruckfeder ausgeführt. Der Steuerkolben 68 umfasst umfangsseitig ein Dichtelement 76. Der Steuerkolben 68 umfasst einen inneren Federraum 78, in dem das erste Federelement 72 angeordnet ist. Des Weiteren stellt der Steuerkolben 68 einen Anlageabschnitt 80 zur Anlage des ersten Federelements 72 bereit. Ebenso stellt der Federteller 70 einen Anlagebereich 82 für das erste Federelement 72 bereit. Das erste Federelement 72 steht unter Druck und bewirkt, dass der Steuerkolben 68 und der Federteller 70 voneinander weg gedrückt werden.

Die Ventilspindel 74 ist mittels eines von dem Steuerkolben 68 abragenden Spindelabschnitts 84 fest mit dem Steuerkolben 68 verbunden. Der Federteller 70 weist einen abragenden und in den Federraum 78 eintauchenden, zylindrischen Abschnitt 86 auf. Durch eine zentrale Durchgangsöffnung 88 des Federtellers 70 ist die Ventilspindel 74 mit dem Spindelabschnitt 84 hindurchgeführt. Die Ventilspindel 74 umfasst einen ersten Anschlagbereich 90, welcher auf einer dem Federraum 78 abgewandten Seite der Durchgangsöffnung 88 angeordnet ist. Ein zweiter Anschlagbereich 92 wird durch eine Innenquerschnittvergrößerung des Abschnitts 86 ausgehend von der Durchgangsöffnung 88 bereitgestellt. In dem gezeigten vorgespannten Zustand der Antriebsbaugruppe 64 bewirken die beiden Anschlagbereiche 90 und 92 eine Begrenzung einer Bewegung des Federtellers 70 und des Steuerkolbens 68 voneinander weg. In dem vorgespannten Zustand liegen der Federteller 70 und der Steuerkolben 68 bzw. der Spindelabschnitt 84 über die Anschlagbereiche 90 und 92 aneinander an.

Die Vorspannbaugruppe 62 ist ebenfalls in einem vorgespannten Zustand gezeigt und umfasst ein unter druckstehendes zweites Federelement 94, welches als Federtellerpaket umfassend drei Tellerfedern ausgeführt ist. Das zweite Federelement 94 ist zwischen einem Gegenlagerabschnitt 96 und einem Klemmabschnitt 100 angeordnet. Ein zylindrischer Abschnitt 102 des Klemmabschnitts 100 ragt durch das zweite Federelement 94 und den Gegenlagerabschnitt 96 hindurch. Der Abschnitt 102 umfasst an seinem distalen Ende eine an seinem Umfang angeordnete Ringnut, in welche ein Ring 104 eingebracht ist. Der Ring 104 bewirkt, dass der Gegenlagerabschnitt 96, welcher mit dem unter Druck stehenden zweiten Federelement 94 entgegen einer Zustellrichtung 34 gedrückt wird, sich mittels des Ringes 104 an dem Klemmabschnitt 100 abstützen kann. Der Klemmabschnitt 100 weist mittels des Ringes 104 einen dritten Anschlagbereich auf. Der Gegenlagerabschnitt 96 bildet radial nach innen einen vierten Anschlagbereich aus. Mittels des dritten und vierten Anschlagbereichs wird eine Bewegung des Klemmabschnitts 100 weg von dem Gegenlagerabschnitt 96 begrenzt. Vorliegend ist der vorgespannte Zustand des Vorspannabschnitts 62 gezeigt, bei dem der Gegenlagerabschnitt 96 an dem Ring 104 anliegt. Der Abschnitt 102 ragt mit seinem distalen Ende in einen Aufnahmeraum 105 des Federtellers 70 hinein.

In einer umfänglichen Nut des Klemmabschnitts 100 ist ein O-Ring 106 angeordnet, welcher beispielsweise aus PTFE besteht und eine Abdichtung mit einer Gehäuseinnenwand bereitstellt. Innerhalb des Abschnitts 102 ist ein Gleitlager 108 angeordnet, in welchem die Ventilspindel 74 geführt ist. In Zustellrichtung 34 schließt sich an das Gleitlager 108 ein Dichtring 110 an, welcher in einer Innennut des Klemmabschnitts 100 angeordnet ist.

Auf der dem Steuerkolben 68 abgewandten Seite der Baugruppe 60 ist die Membran 66 angeordnet. In die Membran 66 ist ein Kontaktelement 112 eingedreht. In das Kontaktelement 112 ist wiederum die Ventilspindel 74 eingedreht. Somit kann eine von dem Steuerkolben 68 ausgehende Kraft mittels des Kontaktelements 112 auf die Membran 66 übertragen werden. Zwischen dem Kontaktelement 112 und der Ventilspindel 74 ist eine Verdrehsicherung 114 angeordnet, welche mittels nicht gezeigter Vorsprünge in Längsnuten des Klemmabschnitts 100, welche sich parallel zur Zustellrichtung 34 erstrecken, eingreift.

Die Membran 66 besteht beispielsweise aus PTFE und geht von einem zentralen Abschnitt in einen dünner ausgestalteten im Betrieb beweglichen Dichtabschnitt 116 über, welcher radial nach außen in einen Befestigungsabschnitt 118 übergeht. Der Befestigungsabschnitt 118 wird zwischen einem Klemmbereich 120 des Klemmabschnitts 100 und dem Klemmbereich 50 des Ventilkörpers 6 verklemmt. Der zentrale Abschnitt wird mittels der Ventilspindel 74 zum Verschließen der Ventilsitzöffnung 28 auf den Ventilsitz 26 gedrückt.

Ein Vorsprung 122, welcher umfangsseitig von dem Klemmabschnitt 100 abragt, ist zu einem Eingriff in eine der Nuten 44 und 46 vorgesehen, um eine Verdrehung des Klemmabschnitts 100 gegenüber dem Ventilkörper 6 zu verhindern bzw. zu begrenzen. Somit besteht eine Verdrehsicherung zwischen dem Ventilkörper 6 und dem Klemmabschnitt 100. Die Verdrehsicherung 114 verhindert bzw. begrenzt eine Verdrehung der Ventilspindel 74 gegenüber dem Klemmabschnitt 100 um eine Zustellachse. Somit stellt die Baugruppe 60 sicher, dass alle Bauteile der Baugruppe 60 gegenüber der Membran 66 im Wesentlichen verdrehsicher angeordnet bleiben. Insbesondere bei einem Eindrehen eines Antriebsgehäuses 4 in den Ventilkörper 6 mit der in dem Montageraum 18 eingebrachten Baugruppe 60 wird so die Reibung zwischen dem Befestigungsabschnitt 118 und dem Klemmbereich 50 minimiert. Dies trägt dazu bei, dass die Membran 66 bei der Montage der Baugruppe 60 nicht beschädigt wird.

Die Baugruppe 60 kann in dem vorgespannten Zustand durch die Montageöffnung 16 des Antriebsgehäuses 4 in den Montageraum 18 eingebracht werden. Der Gegenlagerabschnitt 96 liegt mit seiner Oberfläche 122 nach dem Einbringen in den Montageraum 18 an der Verjüngung 22 an. Nachdem die Baugruppe 60 in den Montageraum 18 eingebracht ist, kann das Antriebsgehäuse 4 mit dem Ventilkörper 6 verbunden werden.

In dem gezeigten vorgespannten Zustand der Baugruppe 60 drückt das erste Federelement 72 den Federteller 70 auf den Gegenlagerabschnitt 96. Das erste Federelement 72 drückt den Steuerkolben 68 entgegen der Zustellrichtung 34 und drückt damit ebenso die Ventilspindel 74 entgegen der Zustellrichtung 34. Mittels des Kontaktelements 112 und der Verdrehsicherung 114 wird die Federkraft des ersten Federelements 72 auf den Klemmabschnitt 100 übertragen. Der Klemmabschnitt 100 wiederum drückt auf das zweite Federelement 94. Die Kräfte der Federelemente 72 und 94 sowie die geometrischen Abmessungen der Antriebsbaugruppe 64 und der Vorspannbaugruppe 62 sind derart aufeinander abgestimmt, dass in dem vorgespannten Zustand der Baugruppe 60 der erste an dem zweiten Anschlagbereich anliegt und der dritte an dem vierten Anschlagbereich anliegt. In dem vorgespannten Zustand sind alle Teile der Baugruppe 60 verliersicher miteinander befestigt.

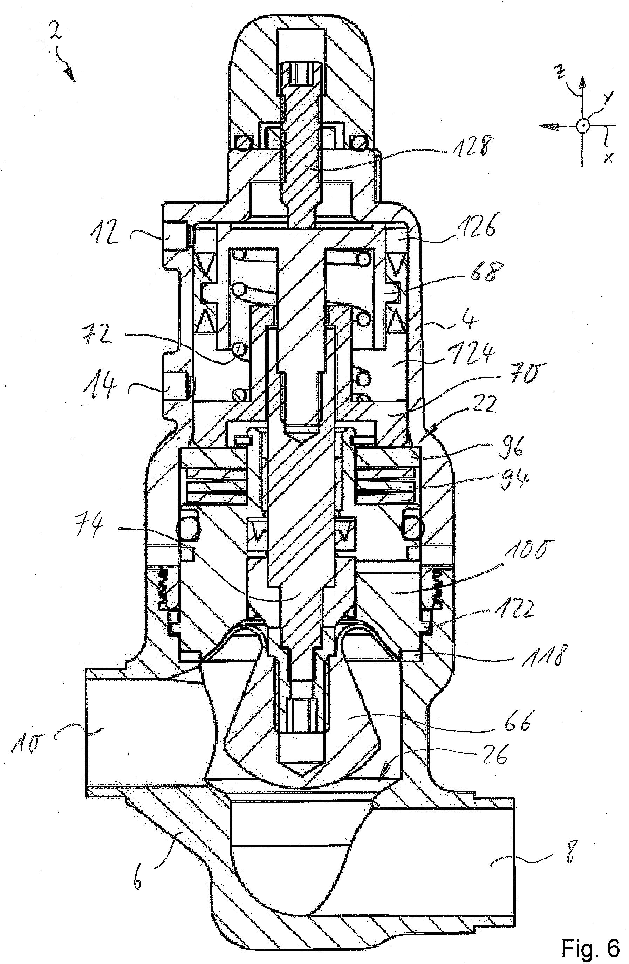

Figur 6 zeigt eine schematische Schnittansicht des Membranventils 2, wobei die Baugruppe 60 innerhalb des Antriebsgehäuses 4 und innerhalb des Ventilkörpers 6 angeordnet ist. Der Steuerkolben 68 unterteilt den Antriebsabschnitt 24 des Antriebsgehäuses 4 in zwei veränderliche Volumina 124 und 126. Die Volumina 124 und 126 sind über die Arbeitsfluid-Anschlüsse 14 und 12 mit Arbeitsfluid beaufschlagbar.

Eine Schraube 128 ist am distalen Ende des Antriebsgehäuses 4 in ein zentrales Innengewinde des Antriebsgehäuses 4 ein gedreht. Die Schraube 128 stellt eine Hubbegrenzung für den Steuerkolben 68 bereit, wobei ein Gesamthub durch die Eindrehung der Schraube 128 in das Innengewinde des Antriebsgehäuses 4 eingestellt wird.

In dem montierten Zustand liegen der erste und der zweite Anschlagbereich der Antriebsbaugruppe 64 nicht aneinander an. In dem montierten Zustand liegen der dritte und der vierte Anschlagbereich der Vorspannbaugruppe 62 nicht aneinander an.

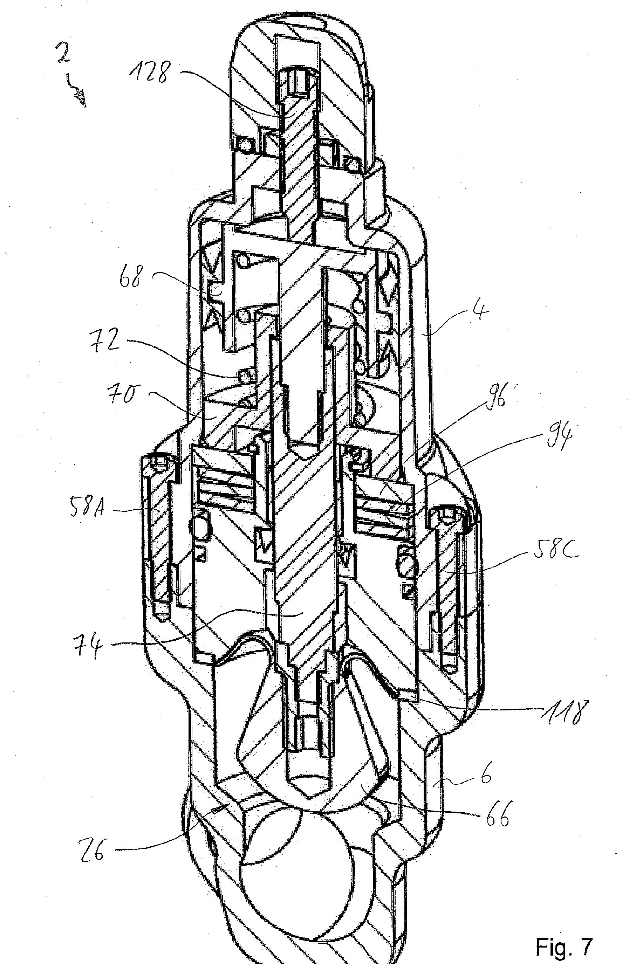

Figur 7 zeigt das Membranventil 2 in einer perspektivischen schematischen Schnittansicht. Alternativ zu der in Figur 6 gezeigten Verschraubung von Antriebsgehäuse 4 und Ventilkörper 6 ist die Befestigungsvariante gemäß der Figur 4 gezeigt, bei welcher Schrauben 58 zur Verbindung des Antriebsgehäuses 4 mit dem Ventilkörper 6 dienen.

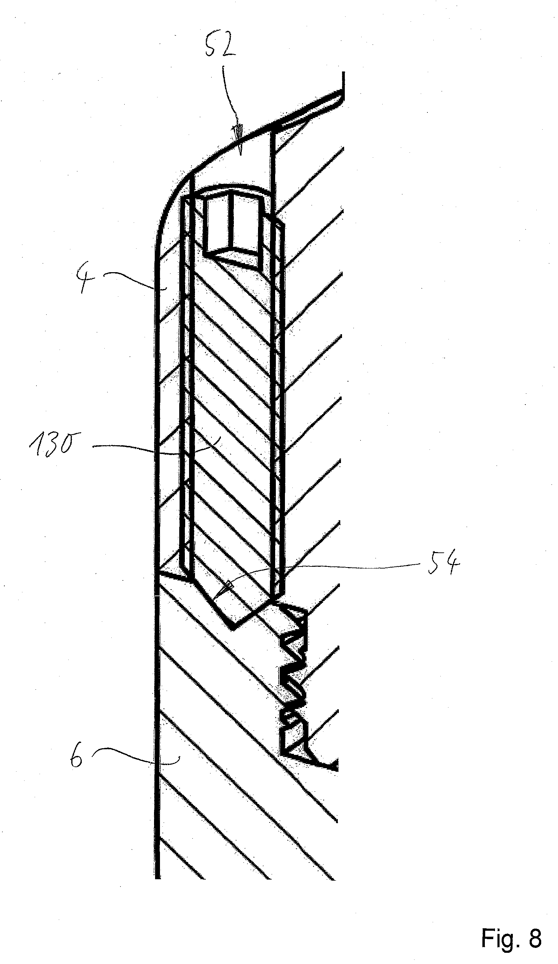

Figur 8 zeigt eine schematische Schnittansicht eines Ausschnitts gemäß der Ausführungsform des Membranventils 2 nach der Figur 3. Die Durchgangsbohrung 52 des Antriebsgehäuses 4 weist ein Innengewinde auf, in welche die Schraube 130 ein gedreht ist. Die Schraube 130 greift in das Sackloch 54 des Ventilkörpers 6 ein und bietet damit eine Sicherung gegen unbeabsichtigtes Abdrehen des Antriebskörpers 4.

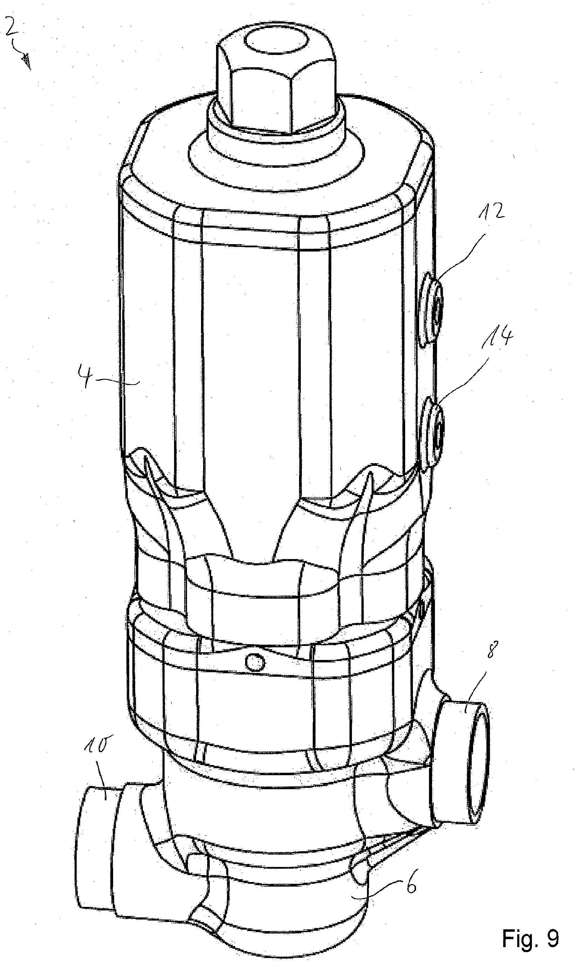

Figur 9 zeigt eine weitere Ausführungsform des Membranventils 2 in einer perspektivischen Ansicht.

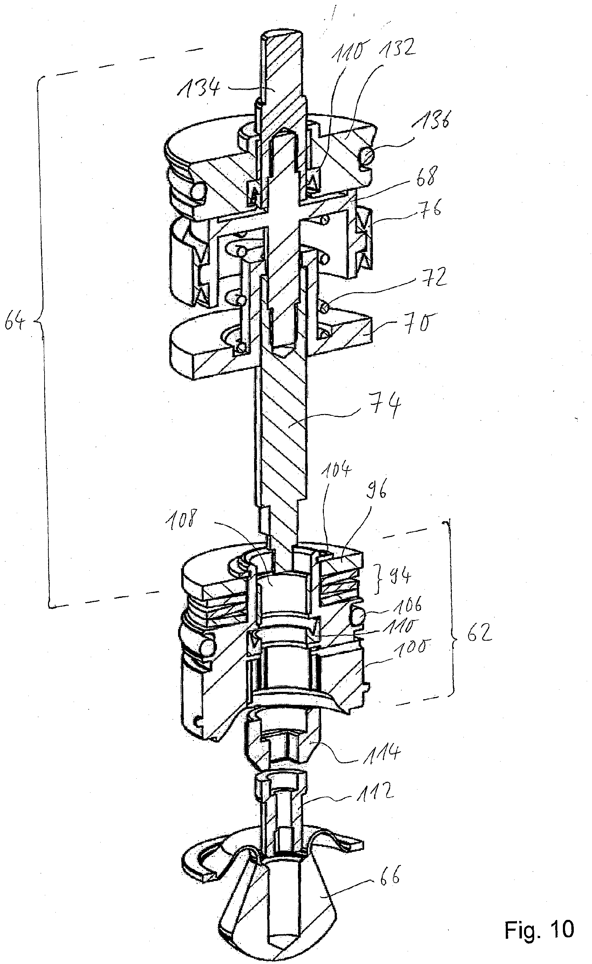

Figur 10 zeigt in einer schematischen Explosions-Schnittansicht die Antriebsbaugruppe 64, die Vorspannbaugruppe 62, die Verdrehsicherung 114, das Kontaktelement 112 und die Membran 66 zu Anordnung in dem Membranventil 2 nach der Figur 9. Auch separiert voneinander befinden sich die Antriebsbaugruppe 64 und die Vorspannbaugruppe 62 in ihrem jeweiligen vorgespannten Zustand. Zum grundsätzlichen Aufbau der Antriebsbaugruppe 64 und der Vorspannbaugruppe 62 wird auf die Beschreibung zu Figur 5 verwiesen.

Die Antriebsbaugruppe 64 der Figur 10 unterscheidet sich dahingehend von der Antriebsbaugruppe 64 der Figur 5, als das entgegen der Zustellrichtung 34 ein Deckel 132 angeordnet ist, durch welcher ein der Ventilspindel 74 abgewandter Spindelabschnitt 134 geführt ist, welcher fest mit dem Steuerkolben 68 verbunden ist. Nach außen dichtet ein weiterer O-Ring 136 den Deckel 132 gegenüber einer Gehäuseinnenwand des Antriebsgehäuses 4 ab. Nach innen dichtet ein Dichtring 110 den Spindelabschnitt 134 gegenüber dem Deckel 132 ab.

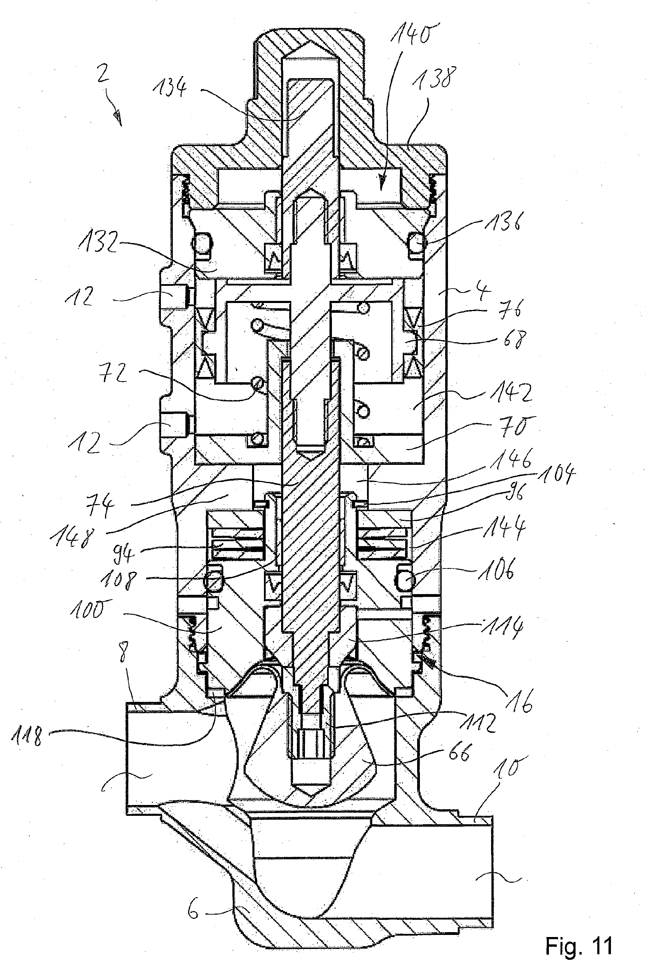

Figur 11 zeigt das Membranventil 2 in einer schematischen Schnittansicht gemäß der Ausführungsform der Figuren 9 und 10. Das Antriebsgehäuse 4 ist mit einem Abschlussdeckel 138, welcher in ein Innengewinde des Antriebsgehäuses 4 eingedreht ist, verschlossen. Bei abgenommenem Abschlussdeckel 138 gibt das Antriebsgehäuse 4 eine von dem Ventilkörper 6 weg orientierte erste Montageöffnung 140 frei. Über die erste Montageöffnung 140 ist die Antriebsbaugruppe 64 in einen ersten Montageraumabschnitt 142 einbringbar. Nach dem Einbringen der Antriebsbaugruppe 64 in den ersten Montageraumabschnitt 142 kann der erste Montageraumabschnitt 142 mit dem Abschlussdeckel 138 verschlossen werden. Der Montagedeckel 138 legt den Deckel 132 gegenüber dem Antriebsgehäuse 4 fest.

Die zweite Montageöffnung 16 gibt den Zugang auf einen zweiten Montageraumabschnitt 144 frei, in welchem die Vorspannbaugruppe 62 angeordnet wird. Eine Durchgangsöffnung 146 verbindet die Montageraumabschnitte 142 und 144. Die Durchgangsöffnung 146 weist einen geringeren Durchmesser auf als die beiden Montageraumabschnitte 142 und 144. Durch die Durchgangsöffnung 146 ist die Ventilspindel 74 geführt. Die Durchgangsöffnung 146 führt durch eine Trennwand 148, welche die beiden Montageraumabschnitte 142 und 144 voneinander trennt.

Bei einer Montage des Membranventils 2 nach der Figur 11 wird bevorzugt zunächst die Antriebsbaugruppe 64 in ihrem vorgespannten Zustand in dem ersten Montageraumabschnitt 142 angeordnet. Nach der Anbringung des Abschlussdeckels 138 ist die Antriebsbaugruppe 64 in den montierten Zustand überführt. Hierbei ragt die Ventilspindel 174 bereits in den und durch den zweiten Montageraumabschnitt 144. Anschließend wird die Vorspannbaugruppe 64 in den zweiten Montageraumabschnitt 144 und über die Ventilspindel 74 geführt. Die Verdrehsicherung 114 wird anschließend in den Klemmabschnitt 100 eingeführt. Anschließend wird das Kontaktelement 112 mit der Ventilspindel 74 verbunden. Anschließend wird die Membran 66 mit dem Kontaktelement 112 verbunden. Damit sind sowohl die Antriebsbaugruppe 64 als auch die Vorspannbaugruppe 62 in dem Antriebsgehäuse 4 angeordnet. Die Vorspannbaugruppe 62 befindet sich noch in dem vorgespannten Zustand.

Nach der Anordnung der Antriebsbaugruppe 64 und der Vorspannbaugruppe 62 in dem Antriebsgehäuse 4 wird das Antriebsgehäuse 4 mit dem Ventilkörper 6 verbunden. Dadurch, dass der Befestigungsabschnitt 118 der Membran 66 zwischen dem Klemmabschnitt 100 bzw. dem Klemmbereich 120 und dem Klemmbereich 50 angeordnet ist, geht die Vorspannbaugruppe 62 bei der Anordnung des Antriebsgehäuses 4 an den Ventilkörper 6 von dem vorgespannten Zustand in den montierten Zustand über, was bedeutet, dass sich der dritte und der vierte Anschlagbereich im montierten Zustand nicht berühren.

In dem montierten Zustand des Membranventils 2 in Figur 11 bildet ein Teil des ersten Montageraums 142 einen Hubzylinder für den Steuerkolben 68. In dem montierten Zustand des Membranventils 2 bewirkt das erste Federelement 72 eine Rückstellung des Steuerkolbens 68 in die gezeigte Position. Deshalb ist das erste Federelement 72 auch als Rückstellfeder bezeichenbar. Die Bewegung des Steuerkolbens 68 wird entgegen der Zustellrichtung 34 von den Deckel 132 begrenzt. In Zustellrichtung 34 wird die Bewegung des Steuerkolbens 68 von dem Federteller 70 begrenzt. Die Antriebsbaugruppe 64 wird zwischen der Trennwand 148 und dem Abschlussdeckel 138 verklemmt.

In dem montierten Zustand stützt sich der Gegenlagerabschnitt 96 an der Trennwand 148 ab. Der Gegenlagerabschnitt 96 ist damit entgegen der Zustellrichtung 34 gegenüber dem Antriebsgehäuse 4 festgelegt. Durch die Festlegung des Antriebsgehäuses 4 zu dem Ventilkörper 6 wird der Gegenlagerabschnitt 96 auch gegenüber dem Ventilkörper 6 und insbesondere gegenüber dem Klemmbereich 50 festgelegt. Das zweite Federelement 94 stützt sich damit an dem gegenüber dem Ventilkörper 6 festgelegten Gegenlagerabschnitt 96 ab und drückt den Klemmabschnitt 100 in einem Klemmbereich 120 auf den Befestigungsabschnitt 118, um damit den Befestigungsabschnitt 118 der Membran 66 fluiddicht zu verklemmen. In dem montierten Zustand ist die Vorspannbaugruppe 62 zwischen der Trennwand 148 und dem Klemmbereich 50 des Ventilkörpers 6 verklemmt.

Der Federteller 70 liegt im montierten Zustand an der zu dem Montageraumabschnitt 142 orientierten Seite der Trennwand 148 an. Der Gegenlagerabschnitt 96 liegt in dem montierten Zustand an der dem zweiten Montageraumabschnitt 144 zugewandten Seite der Trennwand 148 an.

In Figur 11 ist im Unterschied zu der Ausführungsform des Membranventils 2 in der Figur 6 die Trennwand 148 zwischen der Antriebsbaugruppe 64 und der Vorspannbaugruppe 62 angeordnet. Die Trennwand 148 ermöglicht eine Entkopplung der Montageraumabschnitte 142 und 144 dahingehend, dass ein jeweils unterschiedlicher Querschnitt vorgesehen sein kann. Dies ermöglicht durch eine Querschnittsvergrößerung des Kolbenraums in dem ersten Montageraumabschnitt 142 im Vergleich zu dem Querschnitt des zweiten Montageraumabschnitts 144 eine stärkere Ausführung des Antriebs.

## Patentansprüche

1. Ein Membranventil (2) mit einem Antriebsgehäuse (4) und einer in dem Antriebsgehäuse (4) angeordneten Antriebsbaugruppe (64) zum Stellen eines Prozessfluids mittels einer Membran (66), wobei das Membranventil (2) eine Vorspannbaugruppe (62) zur Anordnung zwischen der Antriebsbaugruppe (64) und der Membran (66) umfasst, wobei,
- die Antriebsbaugruppe (64) vor Einbringung in das Antriebsgehäuse (4) mittels eines ersten Federelements (72) in einem vorgespannten Zustand gehalten ist, **dadurch gekennzeichnet,**
- **dass** die Vorspannbaugruppe (62) vor Einbringung in das Antriebsgehäuse (4) mittels eines zweiten Federelements (94) in einem vorgespannten Zustand gehalten ist.

2. Das Membranventil (2) nach Anspruch 1,
- wobei das erste Federelement (72) nach einem Einbringen der Antriebsbaugruppe (64) in das Antriebsgehäuse (4) als Rückstellfeder für einen Antrieb, insbesondere einen Steuerkolben (68), wirkt.

3. Das Membranventil (2) nach Anspruch 1 oder 2,
- wobei das zweite Federelement (94) nach dem Einbringen der Vorspannbaugruppe (62) in das Antriebsgehäuse (4) eine Verklemmung der Membran (66) zwischen der Vorspannbaugruppe (64) und einem Ventilkörper (6) bewirkt.

4. Das Membranventil (2) nach einem der vorstehenden Ansprüche,
- wobei die Antriebsbaugruppe (64) und die Vorspannbaugruppe (62) in ihrem jeweiligen montierten Zustand innerhalb des Antriebsgehäuses (4) eine kleinere Längserstreckung aufweisen als in dem vorgespannten Zustand.

5. Das Membranventil (2) nach einem der vorstehenden Ansprüche,
- wobei das Antriebsgehäuse (4) eine Montageöffnung (16) umfasst, welche den Zugang zu einem Montageraum (18) des Antriebsgehäuses (4) freigibt,
- wobei die Antriebsbaugruppe (64) in dem vorgespannten Zustand und die Vorspannbaugruppe (62) in dem vorgespannten Zustand über die Montageöffnung (16) in den Montageraum (18) einbringbar sind.

6. Das Membranventil (2) nach dem Anspruch 5,
- wobei ein Innenquerschnitt des Montageraums (16) sich von der Montageöffnung (16) weg weisend verjüngt, und
- wobei sich die Vorspannbaugruppe (62) in einem montierten Zustand innerhalb des Antriebsgehäuses (4) an der Verjüngung (22) des Innenquerschnitts abstützt.

7. Das Membranventil (2) nach Anspruch 5 oder 6,
- wobei die Antriebsbaugruppe (64) und die Vorspannbaugruppe (62) zu einer Einbringung in das Antriebsgehäuse (4) verliersicher miteinander verbunden sind.

8. Das Membranventil (2) nach einem der Ansprüche 1 bis 4,
- wobei das Antriebsgehäuse (4) eine von dem Ventilkörper (6) weg orientierte erste Montageöffnung (140) umfasst, welche den Zugang zu einem ersten Montageraumabschnitt (142) des Antriebsgehäuses (4) freigibt,
- wobei das Antriebsgehäuse (4) eine zu dem Ventilkörper (6) hin orientierte zweite Montageöffnung (16) umfasst, welche den Zugang zu einem zweiten Montageraumabschnitt (144) des Antriebsgehäuses (6) freigibt,
- wobei die Antriebsbaugruppe (64) in dem vorgespannten Zustand über die erste Montageöffnung (140) in den ersten Montageraumabschnitt (142) einbringbar ist,
- wobei die Vorspannbaugruppe (62) in dem vorgespannten Zustand über die zweite Montageöffnung (16) in den zweiten Montageraumabschnitt (142) einbringbar ist, und
- wobei der erste und zweite Montageraumabschnitt (142, 144) mittels einer Durchgangsöffnung (104) verbunden sind, durch welche eine Ventilspindel (74) hindurchgeführt ist.

9. Das Membranventil (2) nach einem der vorstehenden Ansprüche,
- wobei die mit dem Steuerkolben (68) der Antriebsbaugruppe (64) verbundene Ventilspindel (74) durch die Vorspannbaugruppe (62) geführt mit der Membran (66) verbunden ist, und
- wobei die Vorspannbaugruppe (62) ein Gleitlager (108) umfasst, in dem die Ventilspindel (74) geführt ist.

10. Das Membranventil (2) nach einem der vorstehenden Ansprüche,
- wobei die Vorspannbaugruppe (62) und der Ventilkörper (6) derart ineinandergreifen, dass eine Verdrehung der Vorspannbaugruppe (62) gegenüber dem Ventilkörper (6) um eine Zustellachse verhindert wird.

11. Das Membranventil (2) nach einem der vorstehenden Ansprüche,
- wobei das Antriebgehäuse (4) ein dem Ventilkörper (6) zugewandtes erstes Gewinde (36) umfasst, und
- wobei der Ventilkörper (6) ein zu dem ersten Gewinde (36) korrespondierendes zweites Gewinde (38) umfasst.

12. Das Membranventil (2) nach dem vorstehenden Anspruch,
- wobei das erste Gewinde (36) und/oder das zweite Gewinde (38) zwei- oder viergängig ausgebildet ist.

13. Das Membranventil (2) nach einem der vorstehenden Ansprüche,
- wobei die Antriebsbaugruppe (64) den Steuerkolben (68) und die mit dem Steuerkolben (68) fest verbundene Ventilspindel (74) umfasst,
- wobei sich der Steuerkolben (68) mittels des unter Druck stehenden ersten Federelements (72) an einem Federteller (70) abstützt,
- wobei die Ventilspindel (74) durch eine Durchgangsöffnung (88) des Federtellers (70) hindurchgeführt ist,
- wobei die Ventilspindel (74) auf einer dem Steuerkolben (68) abgewandten Seite der Durchgangsöffnung (88) einen ersten Anschlagbereich (90) umfasst, und
- wobei in dem vorgespannten Zustand der Antriebsbaugruppe (64) ein zweiter Anschlagbereich (92) des Federtellers (70) in Zusammenwirken mit dem ersten Anschlagbereich (90) der Ventilspindel (74) eine Bewegung des Steuerkolbens (68) weg von dem Ventilteller (70) begrenzt.

14. Ein Membranventil (2) nach einem der vorstehenden Ansprüche,
- wobei die Vorspannbaugruppe (62) einen Gegenlagerabschnitt (96) und einen Klemmabschnitt (100) mit einem Klemmbereich (120) zur Verklemmung der Membran (66) umfasst,
- wobei sich der Klemmabschnitt (100) mittels des unter Druck stehenden zweiten Federelements (94) an dem Gegenlagerabschnitt (96) abstützt,
- wobei der Klemmabschnitt (100) abschnittsweise durch eine Durchgangsöffnung des Gegenlagerabschnitts (96) hindurchgeführt ist,
- wobei der Klemmabschnitt (100) auf einer dem Klemmbereich (120) abgewandten Seite einen dritten Anschlagbereich umfasst, und
- wobei in dem vorgespannten Zustand der Vorspannbaugruppe (62) ein vierter Anschlagbereich des Gegenlagerabschnitts (96) in Zusammenwirken mit dem dritten Anschlagbereich des Klemmabschnitts (100) eine Bewegung des Klemmabschnitts (100) weg von dem Gegenlagerabschnitt (96) begrenzt.

## Claims

1. A membrane valve (2) with a propulsion casing (4) and a propulsion assembly (64) inside the propulsion casing (4) for positioning a process fluid with a membrane (66), whereby the membrane valve (2) has a pretension assembly (62) for alignment between the propulsion assembly (64) and the membrane (66), whereby
- the propulsion assembly (64) is kept in a pre-stressed state before insertion into the propulsion casing (4) via a first spring element (72), distinguished by the fact that
- the pretension assembly (62) is kept in a pre-stressed state before insertion into the propulsion casing (4) via a second spring element (94).

2. The membrane valve (2) as per claim 1,
- whereby the first spring element (72) acts as a return spring for a propulsion, in particular a control piston (68), after insertion of the propulsion assembly (64) into the propulsion casing (4).

3. The membrane valve (2) as per claim 1 or 2,
- whereby the second spring element (94) causes a clamping of the membrane (66) between the pretension assembly (62) and a valve insert (6) after insertion of the pretension assembly (62) into the propulsion casing (4) .

4. The membrane valve (2) as per one of the preceding claims,
- whereby the propulsion assembly (64) and the pretension assembly (62), in their respective mounted state within the propulsion casing (4), have a shorter lengthwise extension than in their pre-stressed state.

5. The membrane valve (2) as per one of the preceding claims,
- whereby the propulsion casing (4) has a mounting opening (16) that provides access to a mounting space (18) of the propulsion assembly (64),
- whereby the propulsion assembly (64) in its pre-stressed state and the pretension assembly (62) in its pre-stressed state can be inserted into the mounting space (18) via the mounting opening (16).

6. The membrane valve (2) as per claim 5,
- whereby an inner cross-section of the mounting space (16) tapers away from the mounting opening (16), and
- whereby the pretension assembly (62) supports itself on the tapering (22) of the inner cross-section in a mounted state within the propulsion casing (4).

7. The membrane valve (2) as per claim 5 or 6,
- whereby the propulsion assembly (64) and the pretension assembly (62) are connected to each other in a loss-proof fashion for insertion into the propulsion casing (4).

8. The membrane valve (2) as per one of the claims 1 to 4,
- whereby the propulsion casing (4) has a first mounting opening (140) facing away from the valve insert (6) that grants access to a first mounting space segment (142) of the propulsion casing (4),
- whereby the propulsion casing (4) has a second mounting opening (16) facing the valve insert (6) that grants access to a second mounting space segment (144) of the propulsion casing (4),
- whereby the propulsion assembly (64), in a pre-stressed state, can be inserted into the first mounting space segment (142) via the first mounting opening (140),
- whereby the pretension assembly (62), in a pre-stressed state, can be inserted into the second mounting space segment (142) via the second mounting opening (16), and
- whereby the first and second mounting opening segments (142, 144) are connected via a transition opening (104) through which a valve spindle (74) is inserted.

9. The membrane valve (2) as per one of the preceding claims,
- whereby the valve spindle (74) connected to the control piston (68) of the propulsion assembly (64) is guided by the pretension assembly (62) and is connected to the membrane (66), and
- whereby the pretension assembly (62) has a friction bearing in which the valve spindle (74) is inserted.

10. The membrane valve (2) as per one of the preceding claims,
- whereby the pretension assembly (62) and the valve body (6) interlock such that the pretension assembly (62) cannot turn against the valve insert (6) around a delivery axis.

11. The membrane valve (2) as per one of the preceding claims,
- whereby the propulsion casing (4) has a first thread (36) facing the valve insert (6), and
- whereby the valve insert (6) has a second thread (38) corresponding to the first thread (36).

12. The membrane valve (2) as per one of the preceding claims,
- whereby the first thread (36) and/or the second thread (38) has a double- or quadruple-start design.

13. The membrane valve (2) as per one of the preceding claims,
- whereby the propulsion assembly (63) includes the control piston (68) and the valve spindle (74) firmly connected to the control piston (68),
- whereby the control piston (68) is supported on a spring cap (70) via the compressed first spring element (72),
- whereby the valve spindle (74) is inserted through a transition opening (88) of the spring cap (70),
- whereby the valve spindle (74) has a first contact area (90) on the side of the transition opening (88) facing away from the control piston (68), and
- whereby, when the propulsion assembly (64) is in a pre-stressed state, a second contact area (92) of the spring cap (70) in conjunction with the first contact area (90) of the valve spindle (74) prevents the control piston (68) from moving away from the valve cap (70).

14. A membrane valve (2) as per one of the preceding claims,
- whereby the pretension assembly (62) has a counter-bearing segment (96) and a clamp segment (100) with a clamp area (120) for clamping the membrane (66),
- whereby the clamp segment (100) is supported on the counter-bearing segment (96) via the compressed second spring element (94),
- whereby the clamp segment (100) is gradually inserted through a transition opening of the counter-bearing segment (96),
- whereby the clamp segment (100) has a third contact area on a side facing away from the clamp area (120), and
- whereby, when the pretension assembly (62) is in a pre-stressed state, a fourth contact area (92) of the counter-bearing segment (96) in conjunction with the third contact area of the clamp segment (100) prevents the clamp segment (100) from moving away from the counter-bearing segment (96).

## Revendications

1. Soupape à membrane (2) avec un carter d'entraînement (4) et un module d'entraînement (64) disposé dans le carter d'entraînement (4) pour le réglage d'un fluide de traitement au moyen d'une membrane (66), dans laquelle la soupape à membrane (2) comprend un module de précontrainte (62) à disposer entre le module d'entraînement (64) et la membrane (66),
dans laquelle,
- le module d'entraînement (64), avant l'introduction dans le carter d'entraînement (4), est retenu dans un état précontraint au moyen d'un premier élément ressort (72),
- que le module de précontrainte (62), avant l'introduction dans le carter d'entraînement (4), est retenu dans un état précontraint au moyen d'un deuxième élément ressort (94).

2. Soupape à membrane (2) selon la revendication 1,
- dans laquelle le premier élément ressort (72), après une introduction du module d'entraînement (64) dans le carter d'entraînement (4), agit comme ressort de rappel pour un entraînement, en particulier un piston de commande (68).

3. Soupape à membrane (2) selon la revendication 1 ou 2,
- dans laquelle le deuxième élément ressort (94), après l'introduction du module de précontrainte (62) dans le carter d'entraînement (4), provoque un blocage de la membrane (66) entre le module de précontrainte (64) et un corps de soupape (6).

4. Soupape à membrane (2) selon l'une quelconque des revendications précédentes,
- dans laquelle le module d'entraînement (64) et le module de précontrainte (62) présentent dans leur état monté respectif à l'intérieur du carter d'entraînement (4) une étendue longitudinale plus petite que dans l'état précontraint.

5. Soupape à membrane (2) selon l'une quelconque des revendications précédentes,
- dans laquelle le carter d'entraînement (4) comprend une ouverture de montage (16), laquelle libère l'accès à un espace de montage (18) du carter d'entraînement (4),
- dans laquelle le carter d'entraînement (64), dans l'état précontraint, et le module de précontrainte (62), dans l'état précontraint, peuvent être introduits dans l'espace de montage (18) par l'intermédiaire de l'ouverture de montage (16).

6. Soupape à membrane (2) selon la revendication 5,
- dans laquelle une section transversale intérieure de l'espace de montage (16) se rétrécit dans la direction opposée à l'ouverture de montage (16), et
- dans laquelle le module de précontrainte (62), dans un état monté à l'intérieur du carter d'entraînement (4), s'appuie sur le rétrécissement (22) de la section transversale intérieure.

7. Soupape à membrane (2) selon la revendication 5 ou 6,
- dans laquelle le module d'entraînement (64) et le module de précontrainte (62) sont reliés l'un à l'autre de manière imperdable pour une introduction dans le carter d'entraînement (4).

8. Soupape à membrane (2) selon l'une quelconque des revendications 1 à 4,
- dans laquelle le carter d'entraînement (4) comprend une première ouverture de montage (140) orientée à distance du corps de soupape (6), laquelle libère l'accès à une première partie d'espace de montage (142) du carter d'entraînement (4),
- dans laquelle le carter d'entraînement (4) comprend une deuxième ouverture de montage (16) orientée en direction du corps de soupape (16), laquelle libère l'accès à une deuxième partie d'espace de montage (144) du carter d'entraînement (6),
- dans laquelle le module d'entraînement (64), dans l'état précontraint, peut être introduit dans la première partie d'espace de montage (142) par l'intermédiaire de la première ouverture de montage (140),
- dans laquelle le module de précontrainte (62), dans l'état précontraint, peut être introduit dans la deuxième partie d'espace de montage (142) par l'intermédiaire de la deuxième ouverture de montage (16), et
- dans laquelle la première et deuxième partie d'espace de montage (142, 144) sont reliées au moyen d'une ouverture de passage (104), à travers laquelle une tige de soupape (74) est guidée.

9. Soupape à membrane (2) selon l'une quelconque des revendications précédentes,
- dans laquelle la tige de soupape (74) reliée au piston de commande (68) du module d'entraînement (64) est reliée à la membrane (66) de manière guidée à travers le module de précontrainte (62), et
- dans laquelle le module de précontrainte (62) comprend un palier lisse (108), dans lequel la tige de soupape (74) est guidée.

10. Soupape à membrane (2) selon l'une quelconque des revendications précédentes,
- dans laquelle le module de précontrainte (62) et le corps de soupape (6) s'imbriquent de telle sorte qu'une rotation du module de précontrainte (62) par rapport au corps de soupape (6) autour d'un axe d'avance est empêchée.

11. Soupape à membrane (2) selon l'une quelconque des revendications précédentes,
- dans laquelle le carter d'entraînement (4) comprend un premier filet (36) tourné vers le corps de soupape (6), et
- dans laquelle le corps de soupape (6) comprend un deuxième filet (38) correspondant au premier filet (36) .

12. Soupape à membrane (2) selon la revendication précédente,
- dans laquelle le premier filet (36) et/ou le deuxième filet (38) sont réalisés avec deux ou quatre pas.

13. Soupape à membrane (2) selon l'une quelconque des revendications précédentes,
- dans laquelle le module d'entraînement (64) comprend le piston de commande (68) et la tige de soupape (74) reliée fixement au piston de commande (68),
- dans laquelle le piston de commande (68) s'appuie au moyen du premier élément ressort (72) sous pression sur une cuvette de ressort (70),
- dans laquelle la tige de soupape (74) est guidée à travers une ouverture de passage (88) de la cuvette de ressort (70),
- dans laquelle la tige de soupape (74) comprend sur une face, opposée au piston de commande (68), de l'ouverture de passage (88) une première zone de butée (90), et
- dans laquelle, dans l'état précontraint du module d'entraînement (64), une deuxième zone de butée (92) de la cuvette de ressort (90), en coopération avec la première zone de butée (90) de la tige de soupape (74), limite un mouvement du piston de commande (68) à distance de la tête de soupape (70).

14. Soupape à membrane (2) selon l'une quelconque des revendications précédentes,
- dans laquelle le module de précontrainte (62) comprend une partie de contre-appui (96) et une partie de serrage (100) avec une zone de serrage (120) destinée au blocage de la membrane (66),
- dans laquelle la partie de serrage (100) s'appuie au moyen du deuxième élément ressort (94) sous pression sur la partie de palier d'appui (96),
- dans laquelle la partie de serrage (100) est guidée sur certaines parties à travers une ouverture de passage de la partie de contre-appui (96),
- dans laquelle la partie de serrage (100) comprend sur une face opposée à la zone de serrage (120) une troisième zone de butée, et
- dans laquelle, dans l'état précontraint du module de précontrainte (62), une quatrième zone de butée de la partie de contre-appui (96), en coopération avec la troisième zone de butée de la partie de serrage (100), limite un mouvement de la partie de serrage (100) à distance de la partie de contre-appui (96).
